# EUROPEAN PATENT SPECIFICATION

(11) **EP 1 732 151 B1**
(45) Date of publication and mention of the grant of the patent: **30.03.2011**
(21) Application number: 06114436.6
(22) Date of filing: 23.05.2006
(51) Int. Cl.: H01M 2/12, H01M 2/36

(54) **Valve body and gel-type electric battery plug incorporating said valve body**
Stopfenstruktur für Batterie mit Gelelektrolyt und in diesem Struktur integrierten Ventilhalter
Structure de bouchon pour batterie à électrolyte gélifié et support de valve integré dans cette structure

(30) Priority: 26.05.2005 IT MI20050976
(43) Date of publication of application: 13.12.2006
(73) Proprietor: Sampellegrini, Angelo, 26025 Pandino (Cremona) (IT)
(72) Inventor: Sampellegrini, Angelo, 26025 Pandino (Cremona) (IT)
(74) Representative: Faggioni, Giovanmaria

(56) References cited:
- EP-A- 0 554 535
- EP-A- 0 756 338
- EP-A- 1 248 315
- US-A- 5 407 760
- US-A1- 2002 094 473

## Description

The present invention concerns the sector of gel-type electric batteries; these are electric batteries wherein the electrolyte consists of a jelly-like substance in place of the usual liquid made with diluted sulphuric acid.

It is known that in these gel-type electric batteries, in order for them to be able to operate correctly, pressure inside the individual elements must always be maintained at a constant level, which may also be a negative value, for example in the order of 100 mbar. For this purpose, in closing plugs intended for the holes provided in the battery top wall, rubber valves are incorporated, and the plugs themselves are applied in a permanent, non-removable manner, to their respective holes.

Since rubber valves must guarantee a constant pressure both in case this value is positive, and in case it is negative, valve function must be guaranteed with maximum precision. This implies all but negligible manufacturing difficulties, which during testing often produce high reject rates.

Document US-5.407.760 shows an electric battery plug incorporating a sintered pad and a pressure release valve. This valve consists of a check disc which, under the pressure of a respective spring, forms a sealing against a fixed sealing edge. This arrangement has a first drawback in that it is capable to perform its function only in case of positive pressure inside the battery; this pressure is imparted, through the sintered pad, to the check disc, raising it from its seat against the action of its respective spring when the pressure exceeds a predefined value. In order to be able to guarantee correct operation, this valve requires for its components to be very precise and for mounting thereof to be carried out very accurately. In large-scale manufacturing it is not always possible to guarantee the required precision, hence these plugs undergo extremely strict leaking tests, following which a good percentage thereof is discarded, thereby remarkably increasing the final manufacturing costs.

Similar considerations can be made in connection with the battery plug shown in EP-0.554.535. Here, too, a sintered pad and a valve body are provided; this last one is formed by a membrane carrying a pipe element equipped with a sealing edge, such edge resting on a check disc under the elastic pressure generated by the membrane. Both the membrane with its pipe element, and the check disc must be manufactured with great precision, and also mounting thereof on the plug body must be accomplished extremely accurately in order to guarantee correct operation at the desired pressures.

A first object of the present invention is hence to suggest a battery plug structure allowing large-scale production with decreased costs of rejects.

It is also known that various types of electrical batteries are currently available on the market, wherein closure of the holes provided in the battery top wall is performed by threaded plugs, bayonet-joint plugs, push plugs, or "Kamina" ramps. Therefore, another drawback of known plug structures - when they have to be used in gel-type batteries - is that each of these types of closing plugs must be transformed through a different embodiment of its respective rubber check valve.

A further object of the present invention is hence to provide a plug structure with a rubber check valve, which may be employed in gel-type batteries and which is more easily adaptable to the different types of battery sockets.

The above-mentioned objects are achieved through a plug structure for gel-type batteries and through preassembled valve body structures as defined in the claims 1 and 9 appended here.

Further features and advantages of the present invention are in any case more evident from the following detailed description of some preferred embodiments, given merely by way of a nonlimiting example and illustrated in the accompanying drawings, wherein:
fig. 1 is a vertical, diagrammatical cross-section of a preassembled valve body used in a plug structure according to the invention;
figs. 2a and 2b are vertical cross-sections of a threaded plug and of a bayonet-joint plug, respectively, in each of which a preassembled valve body such as the one of fig. 1 is plugged in;
fig. 3 is a vertical cross-section of a plug of the type suitable for a "Kamina" ramp, wherein a preassembled valve body such as the one of fig. 1 is plugged in;
fig. 4 is a vertical cross-section of a push-plug, wherein a preassembled valve body such as the one of fig. 1 is plugged in.

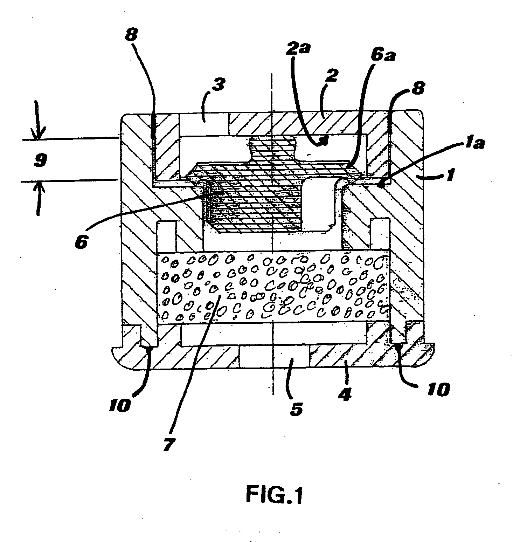

As shown in fig. 1, the preassembled valve body according to the invention comprises a supporting body 1, capable of housing, inside a valve 6, a retaining cover 2 of said valve 6, equipped with an outlet hole 3, and a base 4, in turn equipped with an inlet hole 5.

Valve 6 is a special shape manufactured of rubber (not belonging, per se, to the present invention and hence not described in further detail); the retaining lip 6a thereof rests on the horizontal plane 1a of a shoulder formed inside body 1. The cover 2 is in turn housed within body 1 and equally rests - with its lower edge - on cited plane 1a; it is further firmly secured, preferably welded, to said supporting body 1. Both valve 6 and cover 2, as well as shoulder 1a, are moulded, so that their size is extremely accurate.

During mounting, valve 6 is housed in body 1, and cover 2 is subsequently placed thereon; the lower surface, i.e. the base 2a of this cover, rests on the head of valve 6, acting as a valve-valve presser. Cover 2 is welded to body 1, on edge 8, for example by ultrasound. Thereby it is possible, by accurately adjusting the distance 9 between said base 2a of cover 2 and the plane 1a of supporting body 1, to determine the desired check pressure of valve 6.

Once this preliminary mounting operation has been completed, a first laboratory test is carried out, apt to assess the operating capabilities of the valve thus incorporated in its preassembled valve body. In particular, first a valve-testing negative pressure is applied, with the valve which is expected to open when depression exceeds a predetermined threshold value, for example 100 mbar. Subsequently, a positive test pressure is applied, whereupon the valve is expected to open if said pressure exceeds for example a value in the order of 150 mbar. It must be remembered here, though, that the values of the applied depression and pressure are not standard, but may vary depending on the different plug and/or battery structures, which in turn depend on the design features of manufacturing companies.

According to a main feature of the invention, when the preassembled assembly of supporting valve body and relative valve does not pass the test, it is evidently discarded; however, it is clear that discarding this part of the plug involves neither the entire plug structure (as described in the following), nor the full assembling costs and time, hence allowing to keep reject costs at a minimum.

If the preassembled assembly of supporting body and relative valve has instead passed the test, it is possible to continue with the further assembling being already certain of the perfect operation of valve 6. Hence, said preassembled valve body may be completed by applying filter plate 7 into its housing provided in body 1, and subsequently body 1 may be closed by means of base 4 -thereby also capable of retaining plate 7 - which is fixed, for example by ultrasound welding, along perimeter 10.

Upon completion of the welding operation, and after any further test in order to determine the safety and waterproof state of the valve body assembly, the preassembled assembly is ready for use and may - according to a further important feature of the invention - be applied to various types of plugs.

In the following the application modes of the preassembled valve body to the different types of commonly-used plugs are described.

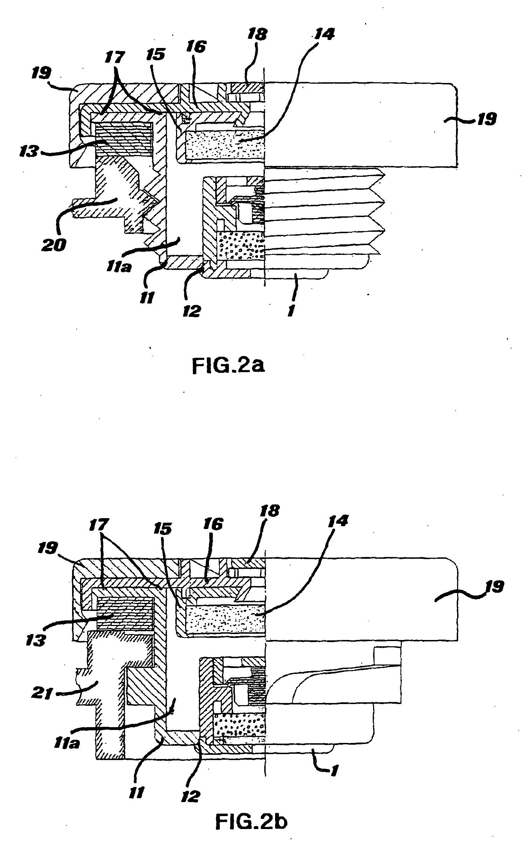

Figs. 2a and 2b show the application of the preassembled valve body to threaded plugs and bayonet plugs, respectively, for gel-type batteries. The difference between the two types of plug is determined only by the way in which the plug is locked in the suitable holes on the battery covers, 20 and 21, respectively. The description is therefore identical for both types of plug, save for different indications.

Plug body 11 defines a cylindrical chamber 11a, closed by a bottom wall wherein an opening 12 is formed, sufficiently wide to allow introduction of the already-described preassembled valve body 1; this body 1 is fixed on plug 11, for example by welding along the round seat of opening 12.

A cover 16 closes from above recess 11a in a non-removable way; in fact, it is welded on the top of body 11, preferably by welding along two different-diameter circumferences 17.

Since, for safety reasons, a blast-protection device needs to be arranged in this type of batteries, the plug structure is completed here by a porous flame-trap disc 14, already known in the art. Said disc is fixed into a housing 15 associated with cover 16 and located between preassembled valve body 1 and cover 16. Cover 16 is further equipped with a gas outlet 18.

Thanks to this construction and to its corresponding sealing, gas flow from inside the battery to the outside may occur only through valve 6, hence through filter plate 7 and vents 3 and 5, as well as through flame-trap disc 14 and outlet 18.

In fact, the sealing of any plug in respect of the hole of the battery top wall 20 or 21, wherein it is fastened by screwing in (fig. 2a) or by bayonet-anchoring (fig. 2b), is further guaranteed by a washer gasket 13, arranged between the top wall of plug body 11 and the same battery cover wall 20 or 21. Sealing is also guaranteed by the fact that said gasket is pressed into its seat by the tightening of a protection and locking ring 19.

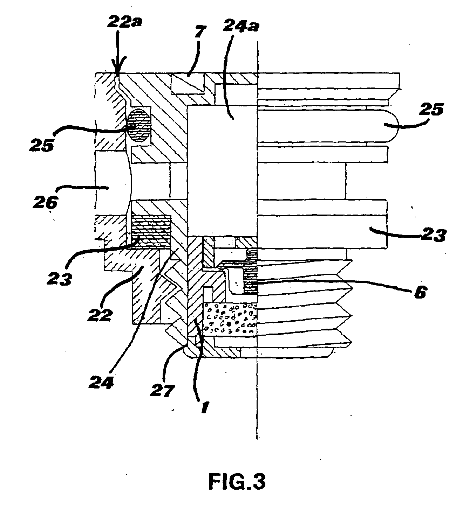

The "Kamina"-type battery plug shown in fig. 3 similarly has a body 24 forming a cylindrical chamber 24a, on the bottom of which preassembled valve body 1 is inserted, fastened by welding on perimeter 27. The difference, over the embodiments of figures 2a and 2b, consists in the fact that chamber 24a is completely closed at the top thereof, while essential communication with the outside is guaranteed through the "Kamina" pipe 26 formed, in a manner known per se and hence not described in detail here, in battery cover 22, in the hole 22a of which plug 24 is screwed.

The further sealing of plug 24 with respect to its housing hole 22a is guaranteed, on the one hand, by washer gasket 23, which is kept pressed by the tightening generated by the screwing of plug body 24 into its housing and, on the other hand, by an upper, O-ring-type gasket 25, whose shape and dimensions are sufficient to ensure sealing above pipe 26.

By this arrangement, even the drawback from which "Kamina"-type plugs currently suffer may be overcome, which currents in arrangement of the sealing 0-ring in a lower position, near the thread, do not adequately guarantee valve operation.

In this type of batteries, given their particular configuration and as is well known, the flame-trap filters are arranged at the outlet of the chimney formed by pipe 26.

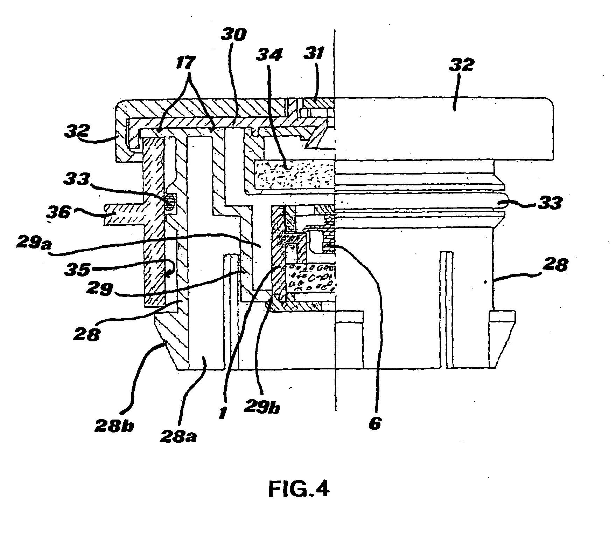

In the case of a plug of the push-mount type, as shown in fig. 4, the main difference consists in the fact that the plug body comprises a main outer wall 28 and an inner wall 29, within which a chamber 29a is formed. For the rest, the structure is fully similar to the one seen with reference to drawings 2a and 2b, in the sense that a preassembled valve body 1 identical to the one of the previous drawings is provided, housed in chamber 29a - being introduced through its bottom wall and fixed into the same by welding 29b - as well as a flame-trap disc 34 mounted in a seat of non-removable cover 30 being provided, above which seat, outlet 31 is formed.

Plug 28 is applied by pressure into the hole 35 of battery cover 36; this hole is shaped as a suitable, lengthened cylindrical seat. Correspondingly, plug 28 has its outer wall extending into flexible appendixes 28a, in a manner known per se; these end with teeth 28b which have an oblique lower surface, forming a bevel easing introduction of the plug, and a transversal upper surface, forming an engaging and retaining tooth preventing the plug from slipping out. Sealing is accomplished in a known manner through an O-ring 33.

It is understood, however, that the invention must not be considered limited to the particular arrangements shown above, which represent only some example embodiments thereof, but that different variants are possible, all within the reach of a person skilled in the field, without departing from the scope of the invention, as defined in the following claims.

## Claims

1. Plug structure for closing the holes in the top wall of electrical batteries of the gel-electrolyte type, wherein a check valve capable of ensuring a steady pressure inside the battery is provided, **characterised in that** said valve (6) is premounted in a preassembled valve body (1), formed as a body separate from the plug and steadily anchored within a respective housing in the plug.

2. Plug structure as in claim 1), **characterised in that** it comprises a central chamber (11a, 24a, 29a), wherein the preassembled valve body is housed (1), introduced through the bottom side, whereto it is fixed, and closed from above by a non-removable cover (16, 30).

3. Plug structure as in claim 2), **characterised in that** said preassembled valve body (1) is sealingly fixed to the bottom of said central chamber (11a, 24a, 29a), preferably by welding (12, 27, 29b) along the perimeter thereof.

4. Plug structure as in claim 2) or 3), **characterised in that** said cover (16, 30) is fixed from above on the body (11, 24, 28) of said closing plug, preferably by welding (17).

5. Plug structure as in any one of claims 1) to 4), wherein a washer gasket (13) is arranged between the plug body (11) and the battery upper wall (20, 21).

6. Plug structure as in claims 3) to 5), **characterised in that** said plug is manufactured for batteries of the type having a "Kamina" ramp.

7. Plug structure as in claim 2) or 6), wherein said battery cover (22) acts as a resting means for a washer gasket (23), said gasket (23) in turn undergoing thrust from the plug body (24).

8. Plug structure as in claim 6) or 7), wherein the plug upper sealing is guaranteed by an upper O-ring (25, 33).

9. Preassembled valve body for plug structures as in anyone of the preceding claims closing the holes in the upper wall of electrical batteries of the gel-electrolyte type,
**characterised in that** it comprises a supporting body (1) wherein a calibrated surface (1a) is formed, acting as a resting seat for the sealing edges (6a) of a valve (6), a valve retaining cover (2) being further mounted on said resting seat, fixed in an operating position correctly calibrated with respect to the resting seat, the base (2a) of said cover rests on the head of the valve, acting as a valve presser.

10. Preassembled valve body as claimed in 9), **characterised in that** said cover (2) is steadily fixed to said supporting body (1) .

11. Preassembled valve body as claimed in 9) or 10), **characterised in that** said cover (2) is welded onto said supporting body (1).

12. Preassembled valve body as claimed in 9), **characterised in that** a housing seat for a filter plate (7) is further formed in said supporting body (1), a retaining base (4) of said filter plate (7) being further associated with said seat.

## Patentansprüche

1. Stopfenstruktur zum Verschließen der Öffnungen in der oberen Wand einer elektrischen Batterie vom Gelelktrolyt-Typ, wobei ein Rückschlagventil vorgesehen ist, das in der Lage ist, einen gleichbleibenden Druck innerhalb der Batterie zu gewährleisten, **dadurch gekennzeichnet, dass** das genannte Ventil (6) in einem vorab zusammengesetzten Ventilkörper (1) vorab eingebaut ist, gebildet als ein Körper getrennt von dem Stopfen und fest verankert innerhalb eines entsprechenden Gehäuses in dem Stopfen.

2. Stopfenstruktur nach Anspruch 1, **dadurch gekennzeichnet, dass** sie eine zentrale Kammer (11a, 24a, 29a) aufweist, in der der vorab zusammengesetzte Ventilkörper aufgenommen ist (1), eingesetzt durch die Unterseite, an der er fixiert ist, und verschlossen von oben durch eine nicht abnehmbare Abdeckung (16, 30).

3. Stopfenstruktur nach Anspruch 2, **dadurch gekennzeichnet, dass** der genannte vorab zusammengesetzte Ventilkörper (1) abgedichtet an der Unterseite der genannten zentralen Kammer (11a, 24a, 29a) fixiert ist, vorzugsweise durch Schweißen (12, 27, 29b) entlang seines Umfangs.

4. Stopfenstruktur nach Anspruch 2 oder 3, **dadurch gekennzeichnet, dass** die genannte Abdeckung (16, 30) von oben auf dem Körper (11, 24, 28) des genannten Verschlussstopfens fixiert ist, vorzugsweise durch Schweißen (17).

5. Stopfenstruktur nach einem der Ansprüche 1 bis 4, **dadurch gekennzeichnet, dass** eine Dichtungsscheibe (13) zwischen dem Stopfenkörper (11) und der oberen Wand der Batterie (20, 21) angeordnet ist.

6. Stopfenstruktur nach den Ansprüchen 3 bis 5, **dadurch gekennzeichnet, dass** der genannte Stopfen für Batterien des Typs gefertigt ist, die eine "Kamina"-Rampe aufweisen.

7. Stopfenstruktur nach Anspruch 2 oder 6, **dadurch gekennzeichnet, dass** die genannte Abdeckung (22) der Batterie als ein Auflagemittel für eine Dichtscheibe (23) wirkt, wobei auf die genannte Dichtung (23) ihrerseits ein Druck von dem Stopfenkörper (24) wirkt.

8. Stopfenstruktur nach Anspruch 6 oder 7, **dadurch gekennzeichnet, dass** die obere Abdichtung des Stopfens durch einen oberen O-Ring (25, 33) sichergestellt ist.

9. Vorab zusammengesetzter Ventilkörper für Stopfenstrukturen nach einem der vorangehenden Ansprüche, der die Öffnungen in der oberen Wand von elektrischen Batterien des Typs mit Gelelektrolyt verschließt, **dadurch gekennzeichnet, dass** er einen Tragkörper (1) aufweist, in dem eine kalibrierte Oberfläche (1a) ausgebildet ist, die als Auflagefläche für die Dichtränder (6a) eines Ventils (6) wirkt, wobei eine das Ventil haltende Abdeckung (2) weiterhin auf dem genannten Auflagesitz angebracht ist, die in einer in Bezug auf den Auflagesitz ordnungsgemäß kalibrierten Betriebsposition fixiert ist, wobei die Basis (2a) der genannten Abdeckung auf dem Kopf den Ventils aufliegt und als ein Ventildruckelement wirkt.

10. Vorab zusammengesetzter Ventilkörper nach Anspruch 9, **dadurch gekennzeichnet, dass** die genannte Abdeckung (2) dauerhaft auf dem genannten Tragkörper (1) fixiert ist.

11. Vorab zusammengesetzter Ventilkörper nach Anspruch 9 oder 10, **dadurch gekennzeichnet, dass** die genannte Abdeckung (2) auf den genannten Tragkörper (1) geschweißt ist.

12. Vorab zusammengesetzter Ventilkörper nach Anspruch 9, **dadurch gekennzeichnet, dass** ein Aufnahmesitz für eine Filterplatte (7) weiterhin in dem genannten Tragkörper (1) ausgebildet ist, wobei eine Haltebasis (4) der genannten Filterplatte (7) dem genannten Sitz weiterhin zugeordnet ist.

## Revendications

1. Structure de bouchon pour fermer les trous dans la paroi supérieure de batteries électriques du type à électrolyte gélifié, où est employé un clapet de non-retour apte à garantir une pression stable dans la batterie, **caractérisée en ce que** ledit clapet (6) est pré-monté dans un corps de clapet pré-assemblé (1), formé en un corps distinct du bouchon et ancré fermement au sein d'un boîtier respectif dans le bouchon.

2. Structure de bouchon selon la revendication 1, **caractérisée en ce qu'**elle comprend une chambre centrale (11a, 24a, 29a), où le corps de clapet pré-assemblé est logé (1), introduit via la face inférieure, à laquelle il est fixé, et fermé depuis le dessus par un couvercle non amovible (16, 30).

3. Structure de bouchon selon la revendication 2, **caractérisée en ce que** ledit corps de clapet pré-assemblé (1) est fixé en toute étanchéité sur le dessous de ladite chambre centrale (11a, 24a, 29a), de préférence par soudage (12, 27, 29b) le long de son périmètre.

4. Structure de bouchon selon la revendication 2 ou 3, **caractérisée en ce que** ledit couvercle (16, 30) est fixé depuis le dessus sur le corps (11, 24, 28) dudit bouchon de fermeture, de préférence par soudage (17).

5. Structure de bouchon selon l'une quelconque des revendications 1 à 4, dans laquelle une rondelle-joint (13) est agencée entre le corps de clapet (11) et la paroi supérieure de batterie (20, 21).

6. Structure de bouchon selon les revendications 3 à 5, **caractérisée en ce que** ledit bouchon est fabriqué à partir de batteries du type comportant une rampe "Kamina".

7. Structure de bouchon selon la revendication 2 ou 6, dans laquelle ledit couvercle de batterie (22) sert de moyen de repos pour une rondelle-joint (13), ladite rondelle-joint (13) subissant, à son tour, une poussée depuis le corps de bouchon (24).

8. Structure de bouchon selon la revendication 6 ou 7, dans laquelle l'étanchéisation supérieure de bouchon est garantie par un joint torique supérieur (25, 33).

9. Corps de clapet pré-assemblé pour structures de bouchon selon l'une quelconque des revendications précédentes, fermant les trous dans la paroi supérieure de batteries électriques du type à électrolyte gélifié, **caractérisé en ce qu'**il comprend un corps de support (1) dans lequel est formée une surface calibrée (1a), servant de siège de repos pour les bords d'étanchéisation (6a) d'un clapet (6), un couvercle de retenue de clapet (2) étant, en outre, monté sur ledit siège de repos, fixé dans une position opérante correctement calibré par rapport au siège de repos , la base (2a) dudit couvercle repose sur la tête du clapet, servant de presseur de clapet.

10. Corps de clapet pré-assemblé selon la revendication 9, **caractérisé en ce que** ledit couvercle (2) est fixé fermement audit corps de support (1).

11. Corps de clapet pré-assemblé selon la revendication 9 ou 10, **caractérisé en ce que** ledit couvercle (2) est soudé sur ledit corps de support (1).

12. Corps de clapet pré-assemblé selon la revendication 9, **caractérisé en ce qu'**un siège de logement pour une plaque filtrante (7) est, en outre, formé dans ledit corps de support (1), une base de retenue (4) de ladite plaque filtrante (7) étant, en outre, associée audit siège.
